# EUROPEAN PATENT SPECIFICATION

(11) **EP 4 311 776 B1**
(45) Date of publication and mention of the grant of the patent: **05.11.2025**
(21) Application number: 22187496.9
(22) Date of filing: 28.07.2022
(51) Int. Cl.: B64D 13/00, B64D 13/06, B01D 53/00

(54) **ENVIRONMENTAL CONTROL SYSTEM**
UMWELTKONTROLLSYSTEM
SYSTÈME DE CONTRÔLE ENVIRONNEMENTAL

(43) Date of publication of application: 31.01.2024
(73) Proprietor: Collins Aerospace Ireland, Limited, Cork T23 C642 (IE)
(72) Inventor: FRANZINI, Giovanni, Glanmire (IE); ZHU, Yonghua, Cork City (IE)
(74) Representative: Dehns

(56) References cited:
- EP-A1- 0 842 847
- WO-A1-2005/082489
- CN-A- 112 406 472
- US-A1- 2015 375 187
- US-A1- 2018 265 204

## Description

This disclosure relates to contaminant removal systems, environmental control systems, and methods of controlling aircraft environments.

### BACKGROUND

Environmental control systems provide compressed and conditioned fresh air to an aircraft cabin to support health and comfort of passengers and crew, often mixing the conditioned fresh air with recirculation air from the cabin. Conditioning of fresh air requires a significant amount of energy and, because the fresh air is often bleed air from an engine, engine efficiency can be reduced as fresh air requirements increase.

US 2018265204 A1 relates to a combined VOC-O2-CO2 treatment system.

EP 0842847 A1 relates to an air supply system for aircraft pressure cabins.

### SUMMARY

According to an aspect of this disclosure there is provided an environmental control system (ECS) for an aircraft according to claim 1.

By removing contaminants from mixed air, the controller may be able to precisely control the contaminant removal system in response to the air quality information to provide cabin air of sufficient quality while reducing energy consumption. This may also permit the ECS to operate with a reduced engine bleed air requirement. Additionally, in contrast to filtering only recirculation air, filtering mixed air might permit contaminants (e.g. from an engine) to be removed from the fresh air, fewer filters and ducts may be required, and pressure of fresh air might balance the pressure drop in the contaminant removal system to reduce required fan power.

In some examples, the ECS further comprises a bypass duct and valve and the controller is further configured to control the bypass valve to selectively bypass the contaminant removal system via the bypass duct. By bypassing the contaminant removal system when the mixed air is already of sufficiently high quality, the pressure drop of the mixed air is reduced, reducing the energy required to maintain cabin pressure.

In some examples, the first contaminant removal unit is configured to remove CO2 and the second contaminant removal unit is configured to remove VOC.

In some examples, the first and second contaminant removal units are connected in parallel. By connecting the units in parallel, pressure drop over each unit is higher than if they were connected in series, reducing energy required to drive the air through the contaminant removal system. Additionally, connecting in parallel might make it easier to select through which units flow is provided.

The controller is configured to control a proportion of the mixed air flowing through the first and second contaminant removal units. The first and second contaminant removal units are for removing different contaminants, and, by varying the proportion of air flowing through each of the units, a required quantity of each contaminant may be removed from the air to provide cabin air of required quality. In some examples, where some contaminants are below a required level in the mixed air, flow through one of the first and second contaminant removal units may be prevented.

In some examples, the controller is configured to control the contaminant removal system based on the air quality information to provide cabin air meeting a minimum quality standard while minimising fuel consumption. In some examples, the controller controls at least one of filter removal efficiency, regeneration temperature, regeneration flow rate, regeneration time, filter flow speed.

In some examples, the ECS comprises an air quality sensor, the air quality sensor configured to provide the air quality information.

In some examples, the ECS comprises a mixed air quality sensor, the mixed air quality sensor configured to determine air quality of the mixed air to provide the air quality information. In some examples, the ECS comprises a cabin air quality sensor, the cabin air quality sensor configured to determine air quality in the cabin to provide the air quality information.

In some examples, the controller is comprised in the contaminant removal system. This may permit the contaminant removal system to be retrofitted to an existing environmental control system.

In some examples, the controller is configured to receive ECS information from an ECS controller and control the contaminant removal system based on the ECS information.

In some examples, the controller is an ECS controller, the ECS controller configured to control additional components (e.g. other than the contaminant removal system) of the ECS. By using the ECS controller to control the contaminant removal system in addition to other aspects of the ECS, the ECS and the contaminant removal system may be simplified, with weight and volume being reduced.

In some examples, the contaminant removal system comprises a first regenerative filter, the first regenerative filter configured to receive regeneration air. In some examples, the regeneration air is conditioned fresh air. In some examples the regeneration air is engine bleed air.

In some examples, the contaminant removal system comprises a second regenerative filter. In some examples, the first and second regenerative filters share a common inlet to receive regeneration air. This may reduce complexity, space requirement and weight. In some examples the first and second regenerative filters are connected in parallel.

In some examples, the contaminant removal system comprises a heat recovery unit, the heat recovery unit configured to recover heat from exhaust air exhausted from the first regenerative filter. In some examples, the heat recovery unit is configured to recover heat from exhaust air exhausted by a plurality of regenerative filters.

In some examples, the recovery unit is configured to heat regeneration air. According to a second aspect of this disclosure there is provided an aircraft comprising the ECS.

According to a fourth aspect of this disclosure there is provided a method of controlling an aircraft environment according to claim 12.

The present invention will be further described and explained by way of example with reference to the accompanying drawings in which
Fig. 1 shows a schematic drawing of an aircraft comprising an environmental control system;
Fig. 2 shows a schematic drawing of an aircraft comprising an environmental control system;
Fig. 3 shows a schematic drawing of an aircraft comprising an environmental control system;
Fig. 4 shows a schematic drawing of a portion of a contaminant removal system;
Fig. 5 shows a schematic drawing of a portion of a contaminant removal system;
   and
Fig. 6 shows a method of controlling a contaminant removal system.

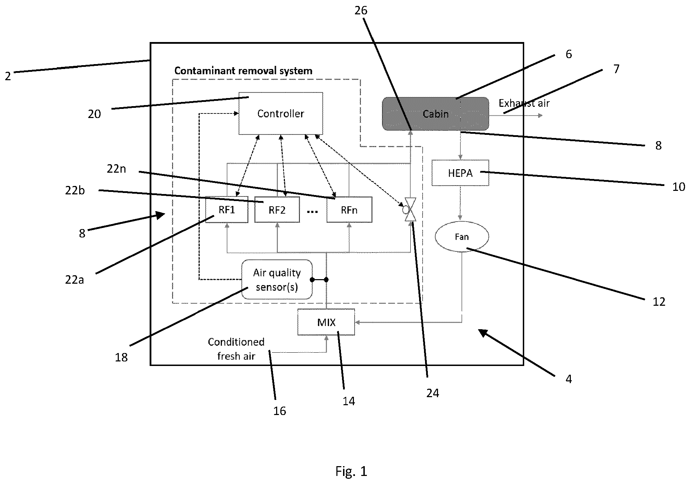

With reference to Fig. 1, an aircraft 2 comprises an environmental control system 4 and a cabin 6. The cabin 6 comprises an exhaust 7 in communication with the outside of the aircraft 6. For clarity features of the environmental control system 4 are omitted from Fig. 1.

The environmental control system 4 comprises a first inlet 8 in fluid communication with the cabin 6. The environmental control system 4 comprises a recirculation filter 10 connected to the inlet 8. The recirculation filter 10 is a high-efficiency particulate absorbing (HEPA) filter. The recirculation filter 10 is configured to remove airborne particles and other bio-contaminants e.g. with a diameter over 0.3 microns. The environmental control system 4 comprises a fan 12 connected to the recirculation filter 10.

The environmental control system 4 comprises a manifold 14. The environmental control system 4 comprises a second inlet 16. The second inlet 16 is connected to a conditioned fresh air source (not shown). The second inlet 16 is connected to the manifold 14. The conditioned fresh air may have been conditioned by other (not shown) components of the environmental control system to meet pressure and temperature requirements of the cabin 6, for example a (not shown) pressurization air conditioning kit (PACK).

The fan 12 is connected to the manifold 14, such that the manifold 14 is in fluid communication with the cabin 6 via the first inlet 8, the recirculation filter 10 and the fan 12. The manifold 14 is connected to the contaminant removal system 8, such that the contaminant removal system 8 receives mixed air from the manifold 14 in use.

The contaminant removal system 8 comprises a mixed air quality sensor 18, a controller 20, contaminant removal units 22a,..,n, a bypass valve 24 and an outlet 26.

The mixed air quality sensor 18 is in fluid communication with the manifold 14, such that the mixed air from the manifold 14 passes the mixed air quality sensor 18. The mixed air quality sensor 18 is in data communication with the controller 20, such that signals from the mixed air quality sensor 18 can be passed to the controller 20.

The contaminant removal units 22a,...,n are in fluid communication with the manifold 14, such that the mixed air from the manifold is passed to the contaminant removal units 22a. The contaminant removal units 22a,...,n are connected in parallel. The bypass valve 24 is connected in parallel to the contaminant removal units 22a,... n. The controller 20 is in communication with the contaminant removal units 22a,...,n and the bypass valve 24 to control their operation in use as described below.

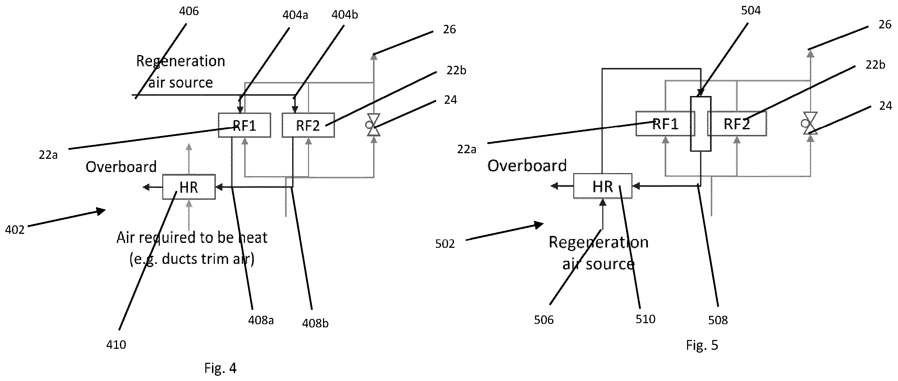

Each of the contaminant units 22a,...,n is a filter. More specifically, each of the contaminant units 22a,...,n is a regenerative filter configured to receive regeneration air. Each regenerative filter is configured to absorb selected contaminants from air, and desorb the selected contaminants to the regeneration air through a regeneration process, as described in more detail with respect to Fig. 4 and Fig. 5.

A first contaminant unit 22a is a carbon dioxide filter for removing carbon dioxide (CO2) from the mixed air. A second contaminant unit 22b is a volatile organic compound (VOC) filter for removing VOCs from the mixed air. Other contaminant units 22c,...,n may be configured to remove other contaminants from the air.

In some examples, a plurality of the contaminant units 22a,...,n are configured to remove the same contaminant from the air. This may allow another contaminant unit to be used while one of the contaminant units undergoes a regeneration cycle, or it may provide more flexibility in response to varying airflow rates and contaminant removal requirements.

The outlet 26 is connected to the contaminant removal units 22a,...,n and the bypass 24, such that the outlet 26 can supply cabin air from the contaminant removal units 22a,...,n and/or the bypass 24 to the cabin 6.

In use, the manifold 14 receives recirculation air from the cabin 6, from the first inlet 8 via the recirculation filter 10 and the fan 12. The fan 12 draws the recirculation air from the cabin 6 to the recirculation filter 10, and passes the recirculation air to the manifold 14. The recirculation filter 10 may perform a preliminary removal of certain contaminants from the recirculation, for example, small particles and bio-contaminants, but not CO2 or VOC Recirculation air is used in this way to reduce the conditioned fresh air requirement, reducing energy consumption.

The manifold 14 receives conditioned fresh air from the second inlet 18. As mentioned previously, the conditioned fresh air has been conditioned, including by pressurisation and heating, by other components of the ECS 4 that are not shown in the figures, including a pneumatic air cycle kit (PACK, not shown). The conditioned fresh air source may receive air from an extraction system for extracting bleed air from an engine. The conditioned fresh air source may receive compressed ram air.

The manifold 14 mixes the recirculation air with the conditioned fresh air to form mixed air. The mixed air flows from the manifold to the contaminant removal system 8.

The mixed air quality sensor 18 measures the quality of the mixed air to determine air quality information. More specifically, the mixed air quality sensor 18 determines the level of contaminants in the mixed air to determine air quality information, for example, the level of CO2 and VOC. The mixed air quality sensor 18 communicates the air quality information to the controller 20. The mixed air flows from the air quality sensor 18 to the contaminant removal units 22a,...,n and the bypass valve 24.

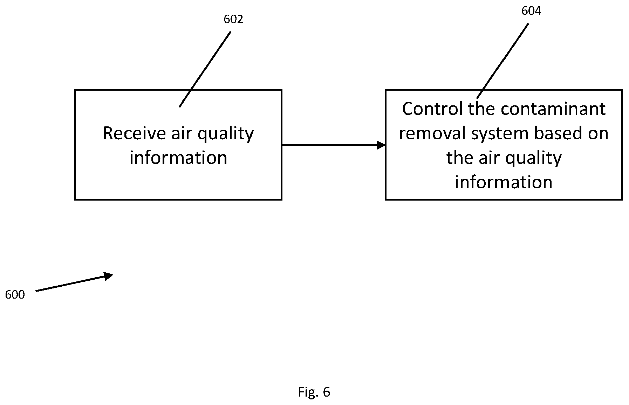

The controller 20 receives the air quality information. The controller 20 controls the contaminant removal system 8 based on the air quality information. More specifically, the controller 20 controls the proportion of the mixed air flow that passes through each of the contaminant removal units 22a,...,n and the bypass valve 24. The controller 20 may also control other operation parameters of the contaminant removal units 22a,...,n. The method by which the controller 20 controls the contaminant removal system 8 is described in more detail below with respect to Fig. 6.

The contaminant removal units 22a,...,n and the bypass valve 24 supply cabin air, formed from the mixed air (e.g. by removal of contaminants), to the cabin 6 via the outlet 26. The ECS and the contaminant removal system 8 operate continuously to supply cabin air to the cabin 6. When the bypass 24 is open and the contaminant removal units 22a,...,n are not removing contaminants from the mixed air, the cabin air is simply the mixed air.

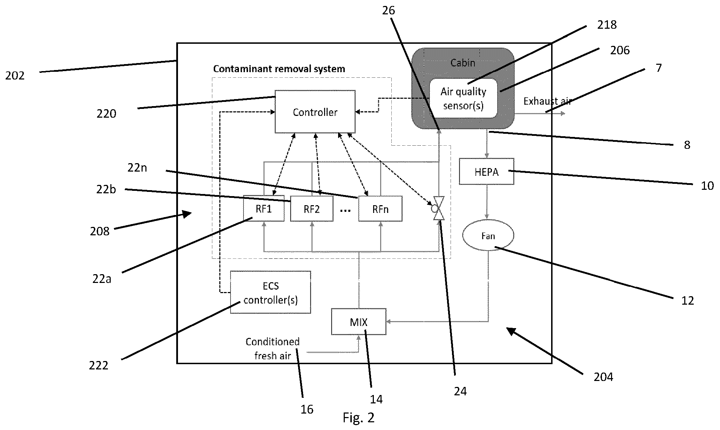

With reference to Fig. 2, a second aircraft 202 comprises a second environmental control system 204 and a second cabin 206. In Fig. 2, the same reference numerals are used for features of the second aircraft 202 which are substantially the same as those of the aircraft 2. In the following text differences between the second aircraft 202 and the aircraft 2 are described, and repeated description of features common to the second aircraft 202 and the aircraft 2 is omitted. For clarity, as in Fig. 1, features of the second environmental control system 204 are omitted from Fig. 2.

The second environmental control system 204 comprises a second contaminant removal system 208. The second contaminant removal system 208, comprises a second controller 220.

The second environmental control system 204 comprises an ECS controller 222. The second controller 220 is in data communication with the ECS controller 222.

The cabin 6 comprises a cabin air quality sensor 218. The cabin air quality sensor 218 is in fluid communication with the second cabin 226. The cabin air quality sensor 218 is in data communication with the second controller 220, such that signals from the cabin air quality sensor 218 can be passed to the second controller 220.

In use, the cabin air quality sensor 218 measures the quality of the mixed air to determine air quality information. More specifically, the cabin air quality sensor 218 determines the level of contaminants in the mixed air to determine air quality information, for example, the level of CO2 and VOC. The cabin air quality sensor 218 communicates the air quality information to the second controller 220.

The second controller 220 receives the air quality information. The controller 220 controls the second contaminant removal system 208 based on the air quality information. The second controller 220 receives ECS information from the ECS controller 222. The second controller 220 controls the second contaminant removal system based on the ECS information. The ECS information may comprise reference values, for instance relating to acceptable levels of contaminants. The ECS controller may reduce fuel consumption by balancing the fresh air requirement (e.g. bleed air extracted from the engine) and the operation of the contaminant removal system. For example, the extraction of bleed air can be reduced and the contaminant removal system controlled to operate at a higher removal rate when greater engine power is required, for instance during take-off and climb. The opposite can also happen, for instance when the aircraft is stationary and the conditioning air is provided by the ground air conditioning module, when it may be preferable to increase the fresh air flow and reduce or switch off the contaminant removal system.

More specifically, the second controller 220 controls the proportion of the mixed air flow that passes through each of the contaminant removal units 22a,...,n and the bypass valve 24. The second controller 220 may also control other operation parameters of the contaminant removal units 22a,...,n. The method by which the second controller 220 controls the second contaminant removal system 208 is described in more detail below with respect to Fig. 6.

In the example illustrated by Fig. 2, the second contaminant removal unit 208 does not include a mixed air quality sensor. However, in other examples, the contaminant removal unit comprises a mixed air quality sensor and the cabin comprises a cabin air quality sensor, and the contaminant removal system is controlled based on signals from both the mixed air quality sensor and the cabin air quality sensor. This may provide redundancy.

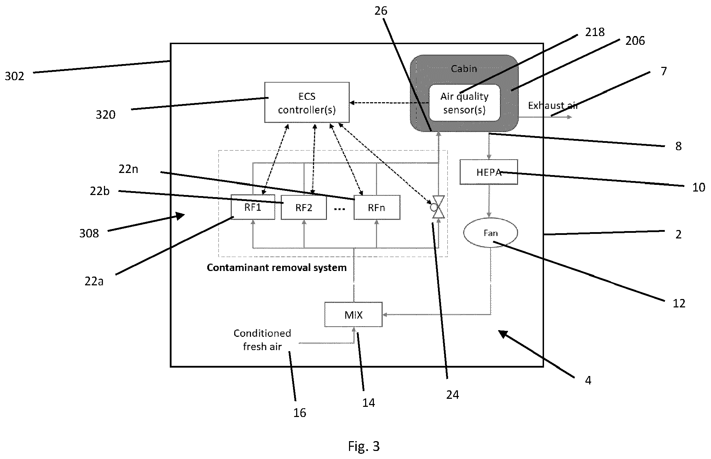

With reference to Fig. 3, a third aircraft 302 comprises a third environmental control system 304. In Fig. 3, the same reference numerals are used for features of the third aircraft 302 which are substantially the same as those of the aircraft 2 and/or the second aircraft 202. In the following text differences between the third aircraft 302 and the second aircraft 202 are described, and repeated description of features common to the third aircraft 302 and the second aircraft 202 is omitted. For clarity, as in Fig. 1, features of the third environmental control system 304 are omitted from Fig. 3.

The third environmental control system 304 comprises a third contaminant removal system 308. The third contaminant removal system 308 does not comprise a controller for controlling the contaminant removal system based on air quality information. Rather, the third environmental control system 304 comprises a third ECS controller 320, which controls the third contaminant removal system 308 in the manner described with respect to Fig. 2 and Fig. 6. As in the example of Fig. 2, the third ECS controller 320 controls the third contaminant removal system based on ECS information, which is already available to the third ECS controller 320.

Fig. 4 shows a first portion 402 of a contaminant removal system, which may form part of the contaminant removal system 8, the second contaminant removal system 208 or the third contaminant removal system 308. For clarity many features of the contaminant removal system are omitted from Fig. 4.

The first portion 402 comprises a first contaminant removal unit 22a and a second contaminant removal unit 22b. The first portion 402 comprises a bypass valve 24. The first portion 402 comprises an outlet 26. The first contaminant removal unit 22a, the second contaminant removal unit 22b, the bypass valve 24 and the outlet 26 may be arranged and controlled in the same manner as is described with reference to the contaminant removal system 8, the second contaminant removal system 208 and/or the third contaminant removal system 308.

Each of the first and second contaminant removal units 22a, 22b is a regenerative filter. The first contaminant removal unit 22a comprises a first regeneration air inlet 404a connected to a regeneration air source 406. The second contaminant removal unit 22b comprises a second regeneration air inlet 404b connected to the regeneration air source 406. The regeneration air may be air that has been used to cool down fresh air in the PACK or other air recycled from the ECS.

The first contaminant removal unit 22a comprises a first regeneration air outlet 408a connected to a heat recovery unit 410 of the ECS. The second contaminant removal unit 22b comprises a second regeneration air outlet 408b connected to the heat recovery unit 410.

In use, as described above, the first and second contaminant removal units 22a, 22b are controlled to remove contaminants from the mixed air.

The first contaminant removal unit 22a may be operated in a first regeneration cycle. In the first regeneration cycle, mixed air flow to the first contaminant removal unit 22a may be prevented. In the first regeneration cycle, regeneration air flows through the first contaminant removal unit 22a, received through the first regeneration air inlet 404a and exhausted through the first regeneration air outlet 408a. By passing air through the first contaminant removal unit 22a, contaminants may be removed from the first contaminant removal unit 22a, increasing filtering efficiency. The first contaminant removal unit 22a may heat the regeneration air, which may increase the efficiency of removal of contaminants from the first contaminant removal unit 22a. During the first regeneration cycle, used regeneration air passes from the first regeneration air outlet 408a to the heat recovery unit 410, which recovers heat from the used regeneration air. The heat recovered from the used regeneration air may be used to form the conditioned fresh air and/or to heat other flows in the ECS, for example, trim air in ducts that flow into the cabin (not shown in the drawings).

The second contaminant removal unit 22b may be operated in a second regeneration cycle. In the second regeneration cycle, flow of mixed air to the second contaminant removal unit 22b may be prevented. In the second regeneration cycle, regeneration air flows through the second contaminant removal unit 22b, received through the second regeneration air inlet 404b and exhausted through the second regeneration air outlet 408b. By passing air through the second contaminant removal unit 22b, contaminants may be removed from the second contaminant removal unit 22b, increasing filtering efficiency. The second contaminant removal unit 22b may heat the regeneration air, which may increase the efficiency of removal of contaminants from the second contaminant removal unit 22b. During the second regeneration cycle, used regeneration air passes from the second regeneration air outlet 408b to the heat recovery unit 410, which recovers heat from the used regeneration air. The heat recovered from the used regeneration air may be used to form the conditioned fresh air or to heat other flows as mentioned above.

Fig. 5 shows a second portion 502 of a contaminant removal system, which may form part of the contaminant removal system 8, the second contaminant removal system 208 or the third contaminant removal system 308. For clarity many features of the contaminant removal system are omitted from Fig. 5.

The second portion 502 comprises a first contaminant removal unit 522a and a second contaminant removal unit 522b. The second portion 402 comprises a bypass valve 24. The second portion 502 comprises an outlet 26. The first contaminant removal unit 522a, the second contaminant removal unit 522b, the bypass valve 24 and the outlet 26 may be arranged and controlled in the same manner as is described with reference to the contaminant removal system 8, the second contaminant removal system 208 or the third contaminant removal system 308.

Each of the first and second contaminant removal units 522a, 522b is a regenerative filter. The first and second contaminant removal units 522a comprise a common regeneration air inlet 504. The first and second contaminant removal units 522a, 522b comprise a common regeneration air outlet 508. By having a common inlet and/or outlet, the amount of ducting external to the contaminant removal units 522a, 522b is reduced, which may reduce weight and space requirements.

The second portion 502 comprises a second heat recovery unit 510. The second heat recovery unit 510 is in fluid communication with the regeneration air outlet 508, such that the second heat recovery unit 510 receives used regeneration air and recovers heat from the used regeneration air.

The first and second contaminant removal units 522a, 522b operate in regeneration cycles in a manner very similar to those of the first portion 402. The first and second contaminant removal units 522a, 522b may undergo regeneration cycles at the same time as each other. The first and second contaminant removal units 522a, 522b may undergo regeneration cycles at different times, with internal valves of the first and second contaminant removal units 522a, 522b permitting flow to one of the units and preventing flow to another.

With reference to Fig. 6, a method 600 of controlling a contaminant removal system 8, 208, 308, comprise, in a first step 602, receiving air quality information, and, in a second step 604, controlling contaminant removal system to remove contaminants from mixed air based on the air quality information. As explained above, while the following description refers to the "controller 20", the method 600 may be performed at a dedicated contaminant removal system controller 20 or at an ECS controller 320. The air quality information may be from a mixed air quality sensor 18, a cabin air quality sensor 218 or both, and the control may further be based on ECS information.

In more detail, in response to a first contaminant being determined to be present (in the mixed air or in the cabin) above a first threshold, the controller 20 increases the proportion of the mixed air flowing through a first contaminant removal unit 22a that is configured to remove the first contaminant. In order to increase the proportion of the mixed air flowing through the first contaminant removal unit 22a, the controller 20 may reduce the proportion of mixed air flowing through the bypass valve 24 and the other contaminant removal units 22b,...,n. In response to the first contaminant being determined to be present in the mixed air above the first threshold, the controller 20 may control the contaminant removal system 8 such that all of the mixed air flows through the first contaminant removal unit 22a, for example, by closing the bypass valve 24 and preventing mixed air from flowing through the other contaminant removal units 22b,...,n. The controller 20 may control the proportion of air passing through each contaminant removal unit 22a,...,n, by controlling valves (not shown) of the contaminant removal units 22a,...,n.

In response to the first contaminant being determined to be present (in the mixed air or in the cabin) above the first threshold, the controller may modify operation parameters of the contaminant removal units 22a,...,n to increase removal of the first contaminant. The operation parameters may include filter removal efficiency or other parameters which effect filter removal efficiency, including regeneration temperature, amount of regeneration air, pressure of the mixed air. For example, the removal efficiency of the first contaminant removal unit 22a may be increased to increase removal of the first contaminant.

In response to first contaminant being present (in the mixed air or in the cabin) below a second threshold, the controller 20 reduces the proportion of mixed air flowing through the first contaminant removal unit 22a. In order to reduce the proportion of the mixed air flowing through the first contaminant removal unit 22a, the controller may increase the proportion of mixed air flowing through the bypass valve 24 and the other contaminant removal units 22b,...,n. In response to the first contaminant being determined to be present (in the mixed air or in the cabin) below the second threshold, the controller 20 may control the contaminant removal system 8 such that none of the mixed air flows through the first contaminant removal unit 22a, for example, by opening the bypass valve 24. The second threshold may be lower threshold than the first threshold.

In response to the first contaminant being determined to be present (in the mixed air or in the cabin) below the second threshold, the controller may modify operation parameters of the contaminant removal units 22a,...,n to reduce removal of the first contaminant. The operation parameters may include filter removal efficiency or other parameters which effect filter removal efficiency, including regeneration temperature, amount of regeneration air, pressure of the mixed air. For example, the removal efficiency of the first contaminant removal unit 22a may be reduced to reduce removal of the first contaminant.

In response to a first contaminant and a second contaminant being determined to be above respective thresholds the controller may operate the first and second contaminant removal units in parallel or sequentially. When operating them sequentially, the controller may use a priority list to determine that a higher priority (e.g. more harmful) contaminant should be removed first, increasing the removal efficiency of a contaminant removal unit that is configured to remove the higher priority contaminant, Although particular embodiments have been shown and described, it will be obvious to those skilled in the art that changes and modifications may be made without departing from this invention as defined by the claims.

## Claims

1. An environmental control system (4, 204, 304) for an aircraft (2, 202, 302), the environmental control system (4, 204, 304) comprising:
a first inlet configured to receive recirculation air from a cabin (6, 206) of the aircraft;
a second inlet (16) configured to receive fresh air;
a manifold (14) for mixing the recirculation air with the conditioned fresh air to form mixed air;
a contaminant removal system (8, 208, 308) configured to remove contaminants from the mixed air to form cabin air;
an outlet (26) configured to supply the cabin air to the cabin;
a controller (20, 220, 320) configured to receive air quality information from an air quality sensor (18, 218), the controller (20, 220, 320) configured to control the contaminant removal system (8, 208, 308) based on the air quality information;
wherein
the contaminant removal system (8, 208, 308) comprises first and second contaminant removal units (22a, 22b) for removing different types of contaminants;
and **characterized in that**
in response to the air quality information indicating a first contaminant being determined to be present in the mixed air above a first threshold, the controller (20, 220, 320) is configured to increase the proportion of the mixed air flowing through a first contaminant removal unit (22a) that is configured to remove the first contaminant.

2. An environmental control system (4, 204, 304) according to claim 1 and further comprising a bypass duct and valve (24), the controller (20) configured to control the bypass valve (24) to selectively bypass the contaminant removal system (4) via the bypass duct.

3. An environmental control system (4, 204, 304) according to claim 1 or 2, wherein the controller (20, 220, 320) is configured to control the contaminant removal system (8, 208, 308) based on the air quality information to provide cabin air meeting a minimum quality standard while minimising fuel consumption.

4. An environmental control system (4, 204) according to any of claims 1 to 3, and further comprising an air quality sensor (18, 218), the air quality sensor (18, 218) configured to provide the air quality information.

5. An environmental control system (4, 204) according to claim 4, wherein the air quality sensor (18, 218) is a mixed air quality sensor (18), the mixed air quality sensor (18) configured to determine air quality of the mixed air to provide the air quality information.

6. An environmental control system (204, 304) according to claim 4, wherein the air quality sensor (218) is a cabin air quality sensor (218), the cabin air quality sensor (218) configured to determine air quality in the cabin to provide the air quality information.

7. An environmental control system (4, 204, 304) according any of claims 1 to 6, wherein the controller (20, 220, 320) is comprised in the contaminant removal system (8, 208, 308).

8. An environmental control system (4, 204, 304) according to any of claims 1 to 6, wherein the contaminant removal system (8, 208, 308) comprises a first regenerative filter (22a), the first regenerative filter (22a) configured to receive regeneration air.

9. An environmental control system (4, 204, 304) according to claim 8, wherein the contaminant system (8, 208, 308) comprises a second regenerative filter (22b), wherein the first and second regenerative filters (22a, 22b) share a common inlet to receive regeneration air.

10. An environment control system (4, 204, 304) according to claim 8 or 9, further comprising a heat recovery unit (410), the heat recovery unit (410) configured to recover heat from exhaust air exhausted from the first regenerative filter (22a), optionally, wherein the recovery unit (410) is configured to heat regeneration air.

11. An aircraft (2, 202, 302) comprising the environmental control system (4, 204, 304) according to any of claims 1-10.

12. A method (600) of controlling an aircraft environment, the method comprising:
receiving recirculation air from a cabin of the aircraft (2, 202, 302);
receiving conditioned fresh air;
mixing the recirculation air with the conditioned fresh air to form mixed air;
receiving air quality information;
controlling a contaminant removal system (8, 208, 308) based on the air quality information, to remove contaminants from the mixed air to form cabin air;
the contaminant removal system (8, 208, 308) comprising first and second contaminant removal units (22a, 22b) for removing different types of contaminants;
in response to the air quality information indicating a first contaminant being determined to be present in the mixed air above a first threshold, the controller (20, 220, 320) increases the proportion of the mixed air flowing through a first contaminant removal unit (22a) that is configured to remove the first contaminant; and
supplying the cabin air to the cabin.

## Patentansprüche

1. Umweltkontrollsystem (4, 204, 304) für ein Luftfahrzeug (2, 202, 302), wobei das Umweltkontrollsystem (4, 204, 304) Folgendes umfasst:
einen ersten Einlass, der dazu konfiguriert ist, Umluft aus einer Kabine (6, 206) des Luftfahrzeugs aufzunehmen;
einen zweiten Einlass (16), der dazu konfiguriert ist, Frischluft aufzunehmen;
einen Verteiler (14) zum Mischen der Umluft mit der aufbereiteten Frischluft, um Mischluft zu bilden;
ein Schadstoffentfernungssystem (8, 208, 308), das dazu konfiguriert ist, Schadstoffe aus der Mischluft zu entfernen, um Kabinenluft zu bilden;
einen Auslass (26), der dazu konfiguriert ist, der Kabine die Kabinenluft zuzuführen;
eine Steuerung (20, 220, 320), die dazu konfiguriert ist, Luftqualitätsinformationen von einem Luftqualitätssensor (18, 218) zu empfangen, wobei die Steuerung (20, 220, 320) dazu konfiguriert ist, das Schadstoffentfernungssystem (8, 208, 308) basierend auf den Luftqualitätsinformationen zu steuern; wobei das Schadstoffentfernungssystem (8, 208, 308) eine erste und eine zweite Schadstoffentfernungseinheit (22a, 22b) zum Entfernen unterschiedlicher Arten von Schadstoffen umfasst; und
**dadurch gekennzeichnet, dass**
die Steuerung (20, 220, 320) als Reaktion auf die Luftqualitätsinformationen, die angeben, dass bestimmt wird, dass ein erster Schadstoff in der Mischluft über einem ersten Schwellenwert vorhanden ist, dazu konfiguriert ist, den Anteil der Mischluft zu erhöhen, der durch eine erste Schadstoffentfernungseinheit (22a) strömt, die dazu konfiguriert ist, den ersten Schadstoff zu entfernen.

2. Umweltkontrollsystem (4, 204, 304) nach Anspruch 1 und ferner umfassend einen Umgehungskanal und ein Umgehungsventil (24), wobei die Steuerung (20) dazu konfiguriert ist, das Umgehungsventil (24) zu steuern, um das Schadstoffentfernungssystem (4) selektiv über den Umgehungskanal zu umgehen.

3. Umweltkontrollsystem (4, 204, 304) nach Anspruch 1 oder 2, wobei die Steuerung (20, 220, 320) dazu konfiguriert ist, das Schadstoffentfernungssystem (8, 208, 308) basierend auf den Luftqualitätsinformationen zu steuern, um Kabinenluft bereitzustellen, die einen Mindestqualitätsstandard erfüllt, während gleichzeitig der Kraftstoffverbrauch minimiert wird.

4. Umweltkontrollsystem (4, 204) nach einem der Ansprüche 1 bis 3 und ferner umfassend einen Luftqualitätssensor (18, 218), wobei der Luftqualitätssensor (18, 218) dazu konfiguriert ist, die Luftqualitätsinformationen bereitzustellen.

5. Umweltkontrollsystem (4, 204) nach Anspruch 4, wobei der Luftqualitätssensor (18, 218) ein Mischluftqualitätssensor (18) ist, wobei der Mischluftqualitätssensor (18) dazu konfiguriert ist, die Luftqualität der Mischluft zu bestimmen, um die Luftqualitätsinformationen bereitzustellen.

6. Umweltkontrollsystem (204, 304) nach Anspruch 4, wobei der Luftqualitätssensor (218) ein Kabinenluftqualitätssensor (218) ist, wobei der Kabinenluftqualitätssensor (218) dazu konfiguriert ist, die Luftqualität in der Kabine zu bestimmen, um die Luftqualitätsinformationen bereitzustellen.

7. Umweltkontrollsystem (4, 204, 304) nach einem der Ansprüche 1 bis 6, wobei die Steuerung (20, 220, 320) in dem Schadstoffentfernungssystem (8, 208, 308) enthalten ist.

8. Umweltkontrollsystem (4, 204, 304) nach einem der Ansprüche 1 bis 6, wobei das Schadstoffentfernungssystem (8, 208, 308) ein erstes regeneratives Filter (22a) umfasst, wobei das erste regenerative Filter (22a) dazu konfiguriert ist, Regenerationsluft aufzunehmen.

9. Umweltkontrollsystem (4, 204, 304) nach Anspruch 8, wobei das Schadstoffsystem (8, 208, 308) ein zweites regeneratives Filter (22b) umfasst, wobei das erste und das zweite regenerative Filter (22a, 22b) einen gemeinsamen Einlass aufweisen, um Regenerationsluft aufzunehmen.

10. Umweltkontrollsystem (4, 204, 304) nach Anspruch 8 oder 9, ferner umfassend eine Wärmerückgewinnungseinheit (410), wobei die Wärmerückgewinnungseinheit (410) dazu konfiguriert ist, Wärme aus der Abluft zurückzugewinnen, die aus dem ersten regenerativen Filter (22a) ausgestoßen wird, wobei die Rückgewinnungseinheit (410) optional dazu konfiguriert ist, Regenerationsluft zu erwärmen.

11. Luftfahrzeug (2, 202, 302), umfassend das Umweltkontrollsystem (4, 204, 304) nach einem der Ansprüche 1-10.

12. Verfahren (600) zum Kontrollieren einer Umwelt eines Luftfahrzeugs, wobei das Verfahren Folgendes umfasst:
Aufnehmen von Umluft aus einer Kabine des Luftfahrzeugs (2, 202, 302);
Aufnehmen von aufbereiteter Frischluft;
Mischen der Umluft mit der aufbereiteten Frischluft, um Mischluft zu bilden;
Empfangen von Luftqualitätsinformationen;
Steuern eines Schadstoffentfernungssystems (8, 208, 308) basierend auf den Luftqualitätsinformationen, um Schadstoffe aus der Mischluft zu entfernen, um Kabinenluft zu bilden;
wobei das Schadstoffentfernungssystem (8, 208, 308) eine erste und eine zweite Schadstoffentfernungseinheit (22a, 22b) zum Entfernen unterschiedlicher Arten von Schadstoffen umfasst;
wobei die Steuerung (20, 220, 320) als Reaktion auf die Luftqualitätsinformationen, die angeben, dass bestimmt wird, dass ein erster Schadstoff in der Mischluft über einem ersten Schwellenwert vorhanden ist, den Anteil der Mischluft erhöht, der durch eine erste Schadstoffentfernungseinheit (22a) strömt, die dazu konfiguriert ist, den ersten Schadstoff zu entfernen;
und
Zuführen der Kabinenluft zu der Kabine.

## Revendications

1. Système de contrôle environnemental (4, 204, 304) pour un aéronef (2, 202, 302), le système de contrôle environnemental (4, 204, 304) comprenant :
une première entrée configurée pour recevoir de l'air de recirculation provenant d'une cabine (6, 206) de l'aéronef ;
une seconde entrée (16) configurée pour recevoir de l'air frais ;
un collecteur (14) pour mélanger l'air de recirculation avec l'air frais conditionné pour former de l'air mélangé ;
un système d'élimination de contaminants (8, 208, 308) configuré pour éliminer les contaminants de l'air mélangé pour former l'air de la cabine ;
une sortie (26) configurée pour fournir l'air de la cabine à la cabine ;
un contrôleur (20, 220, 320) configuré pour recevoir des informations sur la qualité de l'air provenant d'un capteur de qualité de l'air (18, 218), le contrôleur (20, 220, 320) étant configuré pour contrôler le système d'élimination de contaminants (8, 208, 308) sur la base des informations sur la qualité de l'air ; dans lequel le système d'élimination de contaminants (8, 208, 308) comprend des première et seconde unités d'élimination des contaminants (22a, 22b) pour éliminer différents types de contaminants ; et **caractérisé en ce que**
en réponse aux informations sur la qualité de l'air indiquant qu'un premier contaminant est déterminé comme étant présent dans l'air mélangé au-dessus d'un premier seuil, le contrôleur (20, 220, 320) est configuré pour augmenter la proportion de l'air mélangé circulant à travers une première unité d'élimination de contaminant (22a) qui est configurée pour éliminer le premier contaminant.

2. Système de contrôle environnemental (4, 204, 304) selon la revendication 1 et comprenant également un conduit de dérivation et une vanne (24), le contrôleur (20) étant configuré pour contrôler la vanne de dérivation (24) afin de contourner sélectivement le système d'élimination de contaminants (4) par le conduit de dérivation.

3. Système de contrôle environnemental (4, 204, 304) selon la revendication 1 ou 2, dans lequel le contrôleur (20, 220, 320) est configuré pour contrôler le système d'élimination de contaminants (8, 208, 308) sur la base des informations sur la qualité de l'air pour fournir un air de cabine répondant à une norme de qualité minimale tout en réduisant au minimum la consommation de carburant.

4. Système de contrôle environnemental (4, 204) selon l'une quelconque des revendications 1 à 3, et comprenant également un capteur de qualité de l'air (18, 218), le capteur de qualité de l'air (18, 218) étant configuré pour fournir les informations sur la qualité de l'air.

5. Système de contrôle environnemental (4, 204) selon la revendication 4, dans lequel le capteur de qualité de l'air (18, 218) est un capteur de qualité de l'air mélangé (18), le capteur de qualité de l'air mélangé (18) étant configuré pour déterminer la qualité de l'air de l'air mélangé afin de fournir les informations sur la qualité de l'air.

6. Système de contrôle environnemental (204, 304) selon la revendication 4, dans lequel le capteur de qualité de l'air (218) est un capteur de qualité de l'air de cabine (218), le capteur de qualité de l'air de cabine (218) étant configuré pour déterminer la qualité de l'air dans la cabine afin de fournir les informations sur la de qualité de l'air.

7. Système de contrôle environnemental (4, 204, 304) selon l'une quelconque des revendications 1 à 6, dans lequel le contrôleur (20, 220, 320) est compris dans le système d'élimination de contaminants (8, 208, 308).

8. Système de contrôle environnemental (4, 204, 304) selon l'une quelconque des revendications 1 à 6, dans lequel le système d'élimination de contaminants (8, 208, 308) comprend un premier filtre régénératif (22a), le premier filtre régénératif (22a) étant configuré pour recevoir de l'air de régénération.

9. Système de contrôle environnemental (4, 204, 304) selon la revendication 8, dans lequel le système d'élimination de contaminants (8, 208, 308) comprend un second filtre régénératif (22b), dans lequel les premier et second filtres régénératifs (22a, 22b) partagent une entrée commune pour recevoir l'air de régénération.

10. Système de contrôle environnemental (4, 204, 304) selon la revendication 8 ou 9, comprenant également une unité de récupération de chaleur (410), l'unité de récupération de chaleur (410) étant configurée pour récupérer la chaleur de l'air d'échappement évacué du premier filtre régénératif (22a), éventuellement, dans lequel l'unité de récupération (410) est configurée pour chauffer l'air de régénération.

11. Aéronef (2, 202, 302) comprenant le système de contrôle environnemental (4, 204, 304) selon l'une quelconque des revendications 1 à 10.

12. Procédé (600) permettant de contrôler un environnement d'aéronef, le procédé comprenant :
la réception de l'air de recirculation provenant d'une cabine de l'aéronef (2, 202, 302) ;
la réception de l'air frais conditionné ;
le mélange de l'air de recirculation avec l'air frais conditionné pour former de l'air mélangé ;
la réception d'informations sur la qualité de l'air ;
le contrôle d'un système d'élimination de contaminants (8, 208, 308) sur la base des informations sur la qualité de l'air, pour éliminer les contaminants de l'air mélangé pour former l'air de la cabine ;
le système d'élimination de contaminants (8, 208, 308) comprenant des première et seconde unités d'élimination de contaminants (22a, 22b) pour éliminer différents types de contaminants ;
en réponse aux informations sur la qualité de l'air indiquant qu'un premier contaminant est déterminé comme étant présent dans l'air mélangé au-dessus d'un premier seuil, le contrôleur (20, 220, 320) augmente la proportion de l'air mélangé circulant à travers une première unité d'élimination de contaminant (22a) qui est configurée pour éliminer le premier contaminant ; et l'alimentation de la cabine en air de cabine.
